# FASCICULE DE BREVET EUROPEEN

(11) **EP 1 516 813 B1**
(45) Date de publication et mention de la délivrance du brevet: **30.08.2006**
(21) Numéro de dépôt: 04292116.3
(22) Date de dépôt: 02.09.2004
(51) Int. Cl.: B64C 9/32, B64C 9/34, B64C 9/12

(54) **Procédé et système de volet déporteur pour assurer la continuité aerodynamique à l'extrados d'une aile d'aéronef**
Störklappe und deren Betätigungsverfahren zur Verbesserung der aerodynamischen Güte einer Flügeloberfläche
Spoiler and its deployment method for improving the aerodynamic quality of a wing surface

(30) Priorité: 22.09.2003 FR 0311076
(43) Date de publication de la demande: 23.03.2005
(73) Titulaire: AIRBUS France, 31060 Toulouse (FR)
(72) Inventeur: Milliere, Jérôme, 31490 Leguevin (FR)
(74) Mandataire: Bonnetat, Christian

(56) Documents cités:
- GB-A- 1 349 739
- US-A- 4 720 066
- US-A- 4 784 355
- US-A- 5 127 605

## Description

La présente invention concerne un procédé pour assurer la continuité aérodynamique à l'extrados d'une aile d'aéronef au moyen des volets déporteurs, ainsi qu'une aile d'aéronef comportant un système de volet déporteur pour la mise en oeuvre du procédé.

On sait que les aéronefs comportent, sur leurs ailes, des volets de bord de fuite, leur permettant d'augmenter la portance desdites ailes dans certaines phases de vol. De tels volets de bord de fuite peuvent prendre :
- soit une position rentrée, pour laquelle ils sont en continuité aérodynamique avec l'extrados et l'intrados de l'aile qui les porte et dont ils forment une partie du bord de fuite ;
- soit l'une ou l'autre de plusieurs positions sorties, braquées par rapport à ladite position rentrée en bombant l'extrados et en creusant l'intrados de ladite aile.

Par ailleurs, il est usuel que les aéronefs modernes, notamment les avions de transport civil, comportent, dans leurs ailes, des volets déporteurs mobiles, encore appelés "aérofreins" ou, en anglais, "spoilers". De tels volets déporteurs constituent des surfaces aérodynamiques de contrôle et ils sont installés dans l'extrados des ailes, généralement derrière le caisson structural de celles-ci et en avant desdits volets de bord de fuite sur l'extrados desquels reposent leurs propres bords de fuite.

Sous l'action de moyens d'actionnement, par exemple des vérins hydrauliques, électriques ou mécaniques, lesdits volets déporteurs peuvent prendre :
- soit une position rétractée, pour laquelle ils sont logés dans l'extrados de l'aile correspondante en assurant la continuité aérodynamique dudit extrados ;
- soit l'une ou l'autre de plusieurs positions déployées, pour lesquelles ils font saillie par rapport à l'extrados de l'aile correspondante, en étant inclinés par rapport audit extrados.

Ainsi, en position rétractée, lesdits volets déporteurs s'intègrent dans le profil aérodynamique des extrados des ailes de l'aéronef. En revanche, pour chacune des positions déployées --dont chacune d'elles est associée à une fonction spécifique et est définie par une valeur d'angle d'inclinaison par rapport à l'extrados correspondant-- lesdits volets déporteurs entraînent une diminution de portance et une augmentation de traînée dont les amplitudes dépendent dudit angle d'inclinaison et de la surface desdits volets déporteurs et qui peuvent être utilisées à différentes fins telles que :
- réduction de la vitesse de l'aéronef durant les phases d'atterrissage et, éventuellement, d'interruption de décollage ;
- réduction de la vitesse de l'aéronef en vol ou augmentation de la pente de descente dudit aéronef ;
- placage de l'aéronef au sol pour améliorer le freinage pendant les phases d'atterrissage ou d'interruption de décollage ;
- contrôle en vol du roulis de l'aéronef en agissant de façon dissymétrique sur les volets déporteurs des deux ailes ;
- génération d'un moment de lacet par action dissymétrique sur les volets déporteurs des deux ailes participant à contrer les effets d'une panne d'un moteur pendant le décollage ; ou
- aide à la diminution du moment d'encastrement aile/fuselage, aux forts facteurs de charge (manoeuvres, rafales de vent) en modifiant la répartition de la portance le long des ailes.

Comme il a été mentionné ci-dessus, le bord de fuite des volets déporteurs repose sur des volets de bord de fuite, ceci de façon que, lorsque les volets déporteurs sont en position rétractée et que les volets de bord de fuite sont en position rentrée, la continuité aérodynamique soit assurée entre eux.

Cependant, lorsqu'un volet de bord de fuite prend une position sortie, alors que le volet déporteur correspondant est en position rétractée, il apparaît une discontinuité aérodynamique entre le volet déporteur et le volet de bord de fuite, préjudiciable au fonctionnement de ce dernier.

La présente invention a pour objet de remédier à cet inconvénient.

A cet effet, selon l'invention, le procédé pour assurer la continuité aérodynamique à l'extrados d'une aile d'aéronef entre un volet déporteur en position rétractée et un volet de bord de fuite en position sortie, la disposition dudit volet déporteur et dudit volet de bord de fuite étant telle que le bord de fuite dudit volet déporteur en position rétractée s'appuie sur ledit volet de bord de fuite en positon rentrée, est remarquable en ce que, lorsque ledit volet de bord de fuite est en position sortie alors que ledit volet déporteur est en position rétractée, on augmente la longueur dudit volet déporteur parallèlement à sa corde de façon que le bord de fuite dudit volet déporteur s'avance vers ledit volet de bord de fuite et vienne s'appuyer sur l'extrados de celui-ci, afin de compenser la rupture de continuité aérodynamique engendrée par la sortie dudit volet de bord de fuite.

On remarquera que, afin de réduire l'encombrement des volets déporteurs en position rétractée et le dimensionnement de leurs vérins de déploiement, le brevet GB-1 349 739 prévoit, d'une part, de réaliser chacun desdits volets déporteurs sous la forme de plusieurs éléments emboîtés de façon télescopique et, d'autre part, de faire varier la longueur desdits volets déporteurs télescopiques parallèlement à leur corde par l'action de moyens de commande, entre leur position rétractée et leur position déployée et inversement.

Ainsi, lorsqu'il est inactif, en position rétractée, un volet déporteur présente une surface et un encombrement réduits, alors que, lorsqu'il est actif, en position déployée, sa surface est agrandie jusqu'à prendre la valeur apte à permettre audit volet déporteur de remplir pleinement sa fonction.

Par ailleurs, le document US-4 720 066 décrit un agencement de volet de bord de fuite et de volet déporteur tel que, en vol de croisière (c'est-à-dire lorsque le volet de bord de fuite est en position rentrée et non pas en position sortie), on utilise ledit volet de bord de fuite pour contrôler la cambrure du bord de fuite, le volet déporteur étant commandé, sans que l'on en modifie la longueur, pour suivre ledit volet de bord de fuite, afin qu'aucune fente n'apparaisse entre eux.

Pour mettre en oeuvre le procédé conforme à la présente invention, il est avantageux d'utiliser un système de volet déporteur connu de ce type, comportant :
- des moyens d'actionnement aptes à faire passer ledit volet déporteur mobile de ladite position rétractée à une position déployée et inversement ; et
- des moyens de commande aptes à faire varier ladite longueur du volet déporteur,
ledit système de volet déporteur étant remarquable en ce que lesdits moyens de commande sont aptes à faire varier ladite longueur du volet déporteur, lorsque celui-ci est en position rétractée.

Lesdits moyens de commande de la longueur de la corde dudit volet déporteur et lesdits moyens d'actionnement pour le déploiement et la rétraction de celui-ci peuvent être constitués par des organes indépendants l'un de l'autre, sauf à être éventuellement synchronisés dans leurs fonctionnements. Cependant, dans un mode préféré de réalisation, lesdits moyens de commande de la longueur de ladite corde sont constitués par lesdits moyens d'actionnement permettant la rétraction et le déploiement dudit volet déporteur. Dans ce cas, lesdits moyens d'actionnement permettant la rétraction et le déploiement dudit volet déporteur prennent appui sur ledit élément de ce dernier apte à coulisser parallèlement à ladite corde.

Lorsque, comme mentionné ci-dessus, lesdits moyens de commande sont constitués par lesdits moyens d'actionnement du déploiement et de la rétraction du volet déporteur, on prévoit des moyens de blocage aptes à bloquer ledit volet déporteur en position rétractée pendant l'action desdits moyens d'actionnement permettant de faire varier la longueur de corde de ce dernier.

Pour maintenir entre eux lesdits éléments télescopiques du volet déporteur en position rétractée, on prévoit avantageusement des moyens élastiques pressant, contre le reste dudit volet déporteur, le ou les éléments de celui-ci aptes à coulisser parallèlement à ladite corde.

Les figures du dessin annexé feront bien comprendre comment l'invention peut être réalisée. Sur ces figures, des références identiques désignent des éléments semblables.

La figure 1 montre, en vue de dessus schématique et partielle, une aile d'avion conforme à la présente invention avec ses volets déporteurs et ses volets de bord de fuite, respectivement en position rétractée et en position rentrée.

La figure 2 est une vue en coupe schématique, partielle et agrandie, selon la ligne II-II de la figure 1.

La figure 3 montre, en vue semblable à la figure 2, le volet déporteur dans une position déployée et le volet de bord de fuite en position rentrée.

La figure 4 illustre, en vue semblable aux figures 2 et 3, l'extension dudit volet déporteur en position rétractée, le volet de bord de fuite étant en position sortie.

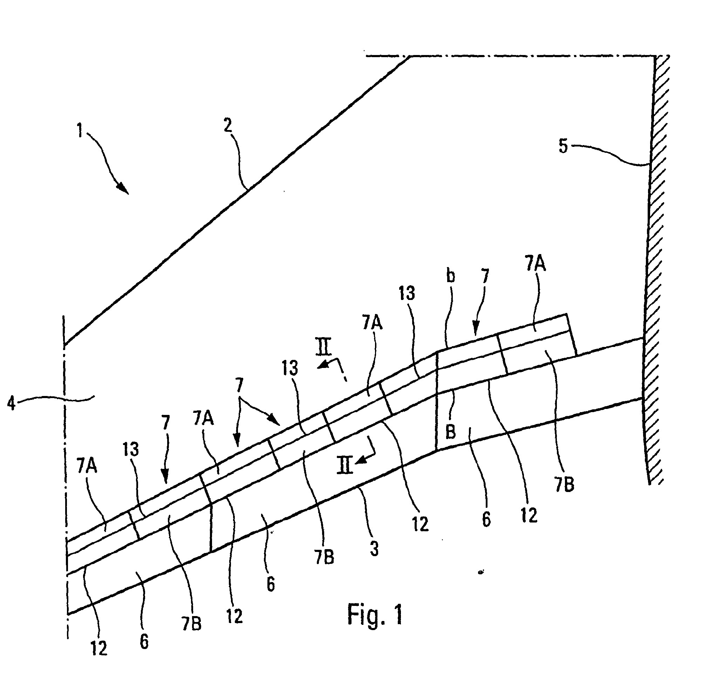

L'aile d'avion 1, représentée partiellement et schématiquement en plan sur la figure 1, comporte un bord d'attaque 2, un bord de fuite 3, un extrados 4 et une emplanture 5.

Le bord de fuite 3 de l'aile 1 est formé par la juxtaposition des bords de fuite d'une pluralité de volets de bord de fuite, adjacents, 6.

Dans l'extrados 4, en amont des volets de bord de fuite 6 (par rapport à l'écoulement aérodynamique sur l'aile 1), sont disposés une pluralité de volets déporteurs 7.

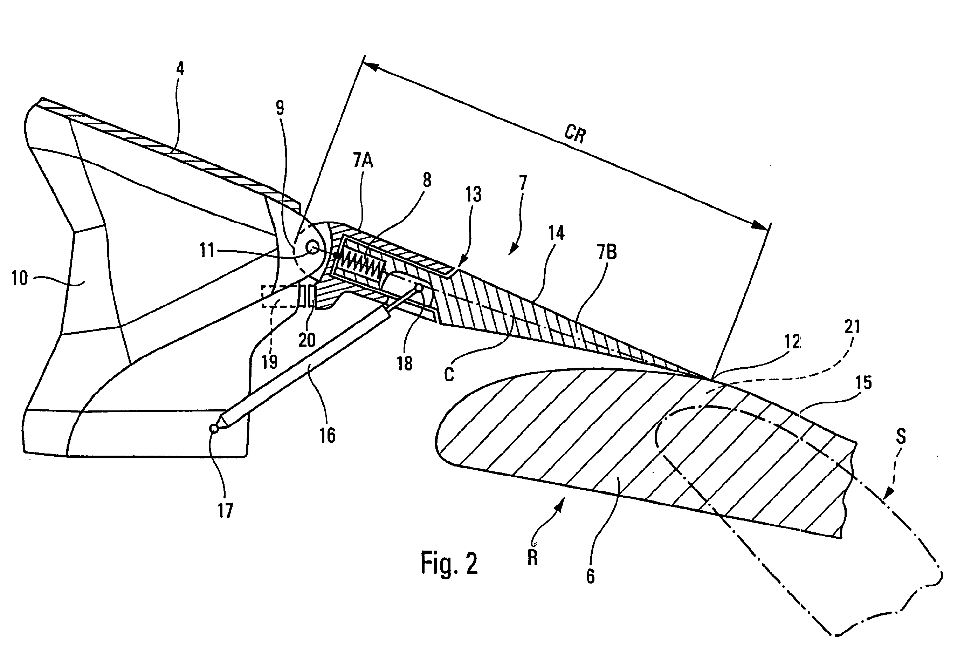

Comme le montre la figure 2, chaque volet déporteur 7 comporte une partie de bord d'attaque 7A et une partie de bord de fuite 7B, cette dernière étant emboîtée de façon télescopique dans ladite partie de bord d'attaque 7A pour pouvoir coulisser par rapport à celle-ci, à l'encontre de l'action d'un ressort 8 tendant à la presser contre ladite partie 7A.

Du côté de son bord d'attaque 9, la partie 7A est articulée à la structure 10 de l'aile 2 autour d'un axe 11, parallèle audit bord d'attaque 9.

Dans la position rétractée représentée sur les figures 1 et 2, le bord de fuite 12 de la partie 7B -qui constitue le bord de fuite du volet déporteur 7- s'appuie sur un volet de bord de fuite 6 en position rentrée R et la longueur CR de la corde C du volet déporteur 7 est fixée par l'action du ressort 8 pressant la partie 7B contre la partie 7A. Entre ces parties 7A et 7B n'existe qu'une fente 13 de très faible largeur et l'extrados 14 du volet déporteur 7 assure la continuité aérodynamique entre l'extrados 4 de l'aile 1 et l'extrados 15 du volet 6.

De plus, la partie 7B du volet déporteur 7 est reliée à la structure 10 de l'aile 1 par une jambe inclinée constituée par un vérin 16, dont les extrémités 17 et 18 sont respectivement articulées sur ladite structure 10 et sur ladite partie 7B.

En position rétractée du volet déporteur 7 (figures 1 et 2), le vérin 16 exerce un effort pour maintenir celui-ci en position rétractée.

Par ailleurs, le volet déporteur 7 peut être verrouillé en position rétractée par un dispositif de blocage commandable l'empêchant de tourner. Un tel dispositif de blocage antirotation peut être de nombreux types différents, par exemple mécanique, électrique ou électromécanique. De préférence, comme représenté sur les figures 2 à 4, on utilise un électroaimant 19, par exemple monté sur la structure 10 et apte à coopérer avec une armature 20, alors montée sur la partie 7A du volet déporteur 7. La force de blocage de la rotation de ce dernier est alors purement électromagnétique et peut être éventuellement surmontée en cas de besoin.

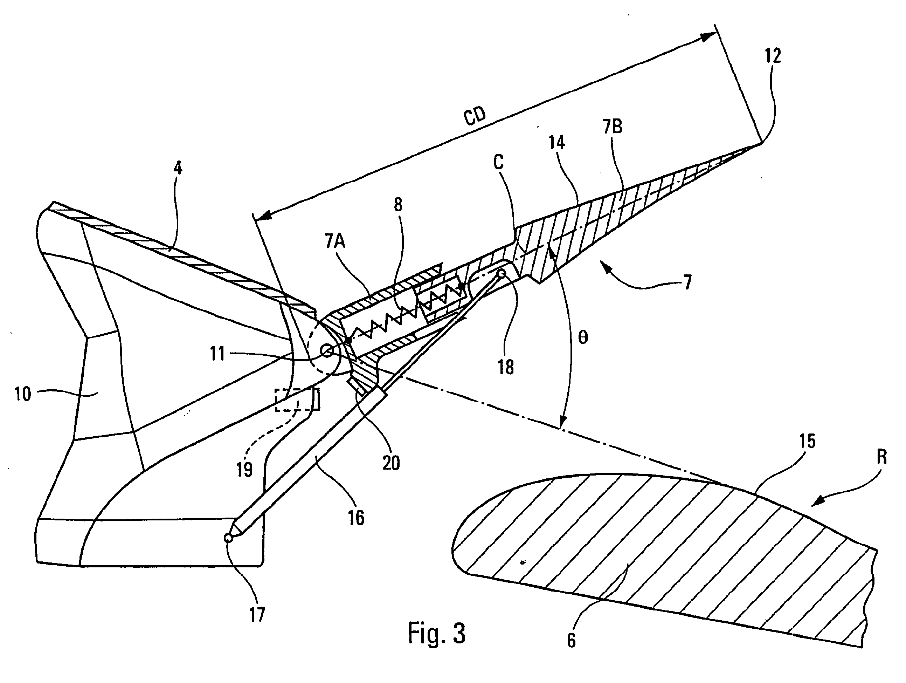

Quand, le dispositif de blocage 19, 20 étant désactivé et le volet de bord de fuite étant dans sa position rentrée R (voir la figure 3), on active le vérin 16, la longueur de celui-ci augmente, de sorte que, simultanément et progressivement, le volet déporteur 7 pivote autour de l'axe 1 en se déployant et la longueur de sa corde C croît à l'encontre de l'action du ressort 8. Comme cela est montré sur la figure 3, pour une position déployée correspondant à un angle de rotation θ, la corde C prend une valeur CD, supérieure à CR.

Bien entendu, bien que sur la figure 3 on n'ait représenté que la seule position déployée correspondant à une valeur de l'angle θ, il va de soi que le volet déporteur 7 peut occuper, pour d'autres utilisations, une ou plusieurs autres positions déployées, correspondant à d'autres valeurs de cet angle.

Par ailleurs, on doit noter que sur les figures schématiques 2 à 4, on n'a pas représenté, à des fins de clarté, les organes de glissement, tels que des glissières à billes ou analogues, disposés entre les deux parties 7A et 7B.

Comme cela est illustré schématiquement sur la figure 2, lorsque, le volet déporteur 7 étant en position rétractée, le volet de bord de fuite 6 passe de sa position rentrée R à une position sortie S, il apparaît une fente 21 entre le bord de fuite 12 du volet déporteur 7 et l'extrados 15 du volet de bord de fuite 6, ce qui crée des perturbations aérodynamiques à l'extrados 4 de l'aile 2, puisqu'il n'y a plus continuité aérodynamique entre l'extrados 14 du volet déporteur 7 et l'extrados 15 du volet de bord de fuite 6.

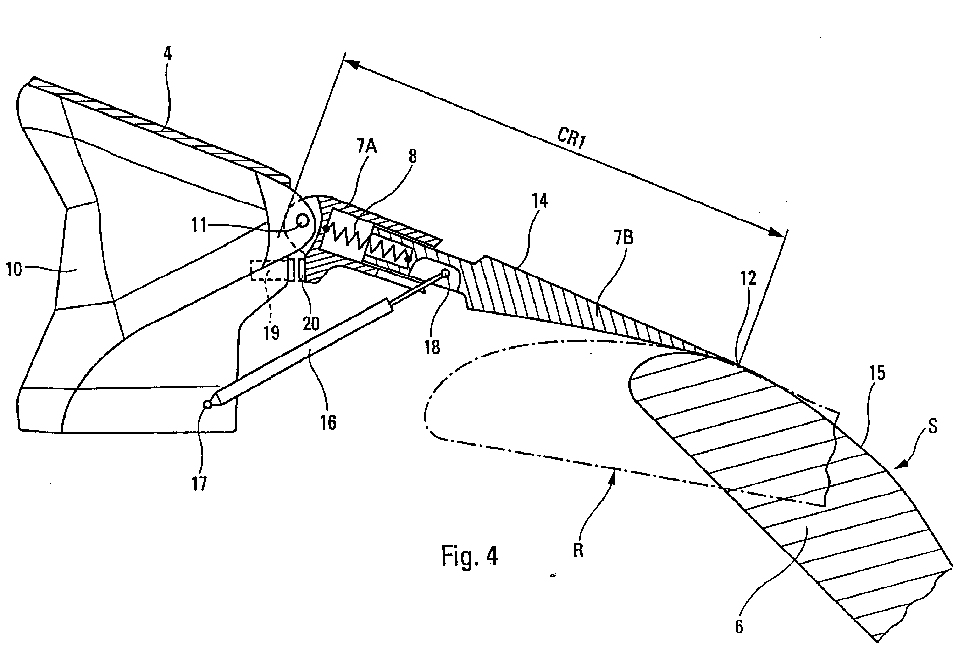

La figure 4 illustre schématiquement comment, selon la présente invention, on remédie à cet inconvénient en utilisant le volet déporteur extensible 7 pour assurer la continuité aérodynamique des extrados 4, 14 et 15 lorsque le volet de bord de fuite 6 prend une portion sortie S.

A cette fin, simultanément, on bloque la rotation du volet déporteur 7 grâce à l'actionnement du dispositif de blocage 19 et 20 et on actionne le vérin 16 pour qu'il augmente la longueur du volet déporteur 7 parallèlement à sa corde C jusqu'à une valeur CR1 (supérieure à CR), de façon que le bord de fuite 12 dudit volet déporteur 7 s'avance vers ledit volet de bord de fuite 6 et vienne s'appuyer sur l'extrados 15 de celui-ci.

## Revendications

1. Procédé pour assurer la continuité aérodynamique à l'extrados d'une aile d'aéronef entre un volet déporteur en position rétractée et un volet de bord de fuite en position sortie, la disposition dudit volet déporteur et dudit volet de bord de fuite étant telle que le bord de fuite dudit volet déporteur en position rétractée s'appuie sur ledit volet de bord de fuite en position rentrée,
**caractérisé en ce que**, lorsque ledit volet de bord de fuite (6) est en position sortie alors que ledit volet déporteur est en position rétractée, on augmente la longueur dudit volet déporteur parallèlement à sa corde de façon que le bord de fuite dudit volet déporteur s'avance vers ledit volet de bord de fuite et vienne s'appuyer sur l'extrados de celui-ci, afin de compenser la rupture de continuité aérodynamique engendrée par la sortie dudit volet de bord de fuite.

2. Aile d'aéronef (1) comportant :
- au moins un volet de bord de fuite (6) apte à se déplacer entre une position rentrée et au moins une position sortie ; et
- au moins un volet déporteur (7) présentant une longueur variable parallèlement à sa corde (C) et apte à se déplacer entre une position rétractée et au moins une position déployée,
la disposition dudit volet déporteur (7) et dudit volet de bord de fuite (6) étant telle que le bord de fuite (12) dudit volet déporteur (7) en position rétractée s'appuie sur ledit volet de bord de fuite (6) en position rentrée et ledit volet déporteur étant destiné à la mise en oeuvre du procédé de la revendication 1 et comportant :
- des moyens d'actionnement (16) aptes à faire passer ledit volet déporteur mobile (7) de la position rétractée à une position déployée et inversement ; et
- des moyens de commande (16)aptes à faire varier ladite longueur de ladite corde (C) dudit volet déporteur mobile (7),
**caractérisé en ce que** lesdits moyens de commande (16) sont aptes à faire varier ladite longueur dudit volet déporteur (7), lorsque celui-ci est en position rétractée.

3. Aile d'aéronef selon la revendication 2,
**caractérisé en ce que** lesdits moyens de commande de la longueur de ladite corde (C) sont constitués par lesdits moyens d'actionnement (16) permettant la rétraction et le déploiement dudit volet déporteur (7).

4. Aile d'aéronef selon la revendication 3,
**caractérisé en ce qu'**elle comporte des moyens de blocage (19, 20) aptes à bloquer ledit volet déporteur (7) en position rétractée pendant l'action desdits moyens d'actionnement (16) permettant de faire varier la longueur de corde de ce dernier.

5. Aile d'aéronef selon la revendication 4,
**caractérisé en ce que** lesdits moyens de blocage (19, 20) exercent une action de blocage électromagnétique.

6. Aile d'aéronef selon l'une des revendications 3 à 5, dans lequel ledit volet déporteur (7) est constitué d'éléments (7A, 7B) emboîtés de façon télescopique, au moins l'un (7B) desdits éléments étant apte à coulisser parallèlement à la corde (C) dudit volet déporteur (7),
**caractérisé en ce que** lesdits moyens d'actionnement (16) permettant la rétraction, le déploiement et la commande de ladite longueur dudit volet déporteur (7) prennent appui sur ledit élément (7B) de ce dernier apte à coulisser parallèlement à ladite corde (C).

7. Aile d'aéronef selon l'une des revendications 2 à 6,
**caractérisé en ce que** lesdits moyens d'actionnement (16) sont du type vérin.

8. Aile d'aéronef selon l'une des revendications 6 ou 7,
**caractérisé en ce que** sont prévus des moyens élastiques (8) tendant à presser, contre le reste (7A) dudit volet déporteur (7), l'élément (7B) de celui-ci apte à coulisser parallèlement à ladite corde (C).

9. Aéronef,
**caractérisé en ce qu'**il comporte des ailes selon l'une quelconque des revendications 2 à 8.

## Claims

1. Method for ensuring the aerodynamic continuity of the upper surface of an aircraft wing between a spoiler (7) in the retracted position and a trailing edge flap (6) in the deployed position, the disposition of said spoiler and of said trailing edge flap being such that the trailing edge of said spoiler in the retracted position bears on said trailing edge flap in the retracted position,
**characterized in that**, when said trailing edge flap (6) is in the deployed position whilst said spoiler is in the retracted position, the length of said spoiler is increased in a direction parallel with its chord (C)in such a way that the trailing edge of said spoiler advances toward said trailing edge flap and comes to bear on the upper surface of the latter, in order to compensate for the break in aerodynamic continuity caused by the deployment of said trailing edge flap.

2. Aircraft wing (1) comprising:
- at least one trailing edge flap (6) able to move between a retracted position and at least one deployed position; and
- a spoiler (7) having a variable length in the direction parallel to its chord (C) and which is able to rotate between a retracted position and at least one deployed position,
the disposition of said spoiler (7) and of said trailing edge flap (6) being such that the trailing edge (12) of said spoiler (7) in the retracted position bear on said trailing edge flap (6) in the retracted position and said spoiler being designed to implement the method of claim 1 and comprising:
- actuating means (16) able cause said mobile spoiler (7) to move from said retracted position to a deployed position and vice versa; and
- control means (16) for varying said length of said chord (C) of said movable spoiler (7),
**characterized in that** said control means (16) are capable of varying said length of said spoiler (7) when the latter is in the retracted position.

3. Aircraft wing as claimed in claim 2,
**characterized in that** said means of controlling the length of said chord (C) are constituted by said actuating means (16) allowing the retraction and the deployment of said spoiler (7).

4. Aircraft wing as claimed in claim 3,
**characterized in that** it comprises locking means (19, 20) capable of locking said spoiler (7) in the retracted position during the action of said actuating means (16) making it possible to vary the length of the chord of the latter.

5. Aircraft wing as claimed in claim 4,
**characterized in that** said locking means (19, 20) apply an electromagnetic locking action.

6. Aircraft wing as claimed in one of claims 3 to 5, wherein said spoiler (7) is constituted by telescopically nested elements (7A, 7B), at least one (7B) of said elements being capable of sliding in a direction parallel with the chord (C) of said spoiler (7),
**characterized in that** said actuating means (16) allowing the retraction, the deployment and the control of said length of said spoiler (7) bear on said element (7B) of the latter capable of sliding in a direction parallel with said chord (C).

7. Aircraft wing as claimed in one of claims 2 to 6,
**characterized in that** said actuating means (16) are of the jack type.

8. Aircraft wing as claimed in one of claims 6 or 7,
**characterized in that** there are provided elastic means (8) tending to press, against the rest (7A) of said spoiler (7), the element (7B) of the latter that is capable of sliding in a direction parallel with said chord (C).

9. Aircraft,
**characterized in that** it comprises wings as claimed in one of claims 2 to 8.

## Patentansprüche

1. Verfahren zum Verbessern der aerodynamischen Kontinuität der Außenfläche eines Flugzeugflügels zwischen einer Störklappe (7) in zurückgezogener Position und einer Hinterkantenklappe (6) in ausgestellter Position, wobei die Anordnung der Störklappe und der Hinterkantenklappe derart ist, dass die Hinterkante der Störklappe in zurückgezogener Position auf der Hinterkantenklappe in eingefahrener Position abgestützt ist,
**dadurch gekennzeichnet, dass**, wenn sich die Hinterkantenklappe (6) in der ausgestellten Position befindet, während sich die Störklappe (7) in der zurückgezogenen Position befindet, die Länge der Störklappe parallel zu ihrer Weite (C) vergrößert wird, derart, dass sich die Hinterkante der Störklappe zur Hinterkantenklappe hin vorschiebt und auf der Außenfläche derselben abgestützt wird, um so den durch das Ausstellen der Hinterkantenklappe erzeugten Bruch der aerodynamischen Kontinuität auszugleichen.

2. Flugzeugflügel (1) mit:
- wenigstens einer Hinterkantenklappe (6), die so ausgebildet ist, dass sie sich zwischen einer eingefahrenen Position und wenigstens einer ausgestellten Position verschieben kann; und
- wenigstens einer Störklappe (7), welche eine parallel zu ihrer Weite (C) variable Länge aufweist und so ausgebildet ist, dass sie sich zwischen einer zurückgezogenen Position und wenigstens einer ausgefahrenen Position verschieben kann,
wobei die Anordnung der Störklappe (7) und der Hinterkantenklappe (6) derart ist, dass sich die Hinterkante (12) der Störklappe (7) in der zurückgezogenen Position auf der Hinterkantenklappe (6) in der eingefahrenen Position abstützt und die Störklappe zur Durchführung des Verfahrens nach Anspruch 1 bestimmt ist und umfasst:
- Betätigungsmittel (16), die so ausgebildet sind, dass sie die bewegliche Störklappe (7) aus der zurückgezogenen Position in eine ausgefahrene Position und umgekehrt bewegen lassen; und
- Steuermittel (16), die so ausgebildet sind, dass sie die Länge der Weite (C) der beweglichen Störklappe (7) variieren lassen,
**dadurch gekennzeichnet, dass** die Steuermittel (16) so ausgebildet sind, dass sie die Länge der Störklappe (7) variieren lassen, wenn sich diese in der zurückgezogenen Position befindet.

3. Flugzeugflügel nach Anspruch 2,
**dadurch gekennzeichnet, dass** die Steuermittel für die Länge der Weite (C) durch die Betätigungsmittel (16) gebildet werden, welche das Zurückziehen und das Ausfahren der Störklappe (7) ermöglichen.

4. Flugzeugflügel nach Anspruch 3,
**dadurch gekennzeichnet, dass** dieser Blockiermittel (19, 20) umfasst, die so ausgebildet sind, dass sie die Störklappe (7) während der Betätigung der Betätigungsmittel (16) in der zurückgezogenen Position blockieren, wodurch die Länge der Weite derselben variiert werden kann.

5. Flugzeugflügel nach Anspruch 4,
**dadurch gekennzeichnet, dass** die Blockiermittel (19, 20) eine elektromagnetische Blockierwirkung ausüben.

6. Flugzeugflügel nach einem der Ansprüche 3 bis 5, in welchem die Störklappe (7) aus Elementen (7A, 7B) gebildet wird, die teleskopisch eingepasst sind, wobei wenigstens eines (7B) der Elemente so ausgebildet ist, dass sich dieses parallel zu der Weite (C) der Störklappe (7) verschieben kann,
**dadurch gekennzeichnet, dass** die Betätigungsmittel (16), welche das Einziehen, das Ausfahren und die Steuerung der Länge der Störklappe (7) ermöglichen, auf dem Element (7B) derselben zur Anlage kommen, das so ausgebildet ist, dass es sich parallel zu der Weite (C) verschieben lässt.

7. Flugzeugflügel nach einem der Ansprüche 2 bis 6,
**dadurch gekennzeichnet, dass** die Betätigungsmittel (16) ein Stellglied sind.

8. Flugzeugflügel nach einem der Ansprüche 6 oder 7,
**dadurch gekennzeichnet, dass** elastische Mittel (8) vorgesehen sind, welche gegen den Rest (7A) der Störklappe (7) das Element (7B) derselben drücken, das so ausgebildet ist, dass es sich parallel zu der Weite (C) verschieben lässt.

9. Flugzeug,
**dadurch gekennzeichnet, dass** dieses Flügel gemäß einem der Ansprüche 2 bis 8 aufweist.
